# EUROPEAN PATENT APPLICATION

(11) **EP 4 510 070 A1**
(43) Date of publication of application: **19.02.2025**
(21) Application number: 24195251.4
(22) Date of filing: 19.08.2024
(51) Int. Cl.: G06Q 50/10, G06Q 10/20, A47K 17/00

(54) **ARRANGEMENT AND ORGANIZATION OF TOILET FACILITIES**

(30) Priority: 18.08.2023 BE 202305690
(71) Applicant: Rogiest, Wouter, 9840 De Pinte (BE)
(72) Inventor: Rogiest, Wouter, 9840 De Pinte (BE)
(74) Representative: Rogiest, Wouter

(57) **Abstract**

The invention relates to a method for controlling an accessibility with respect to a plurality of compartmentalized service units (1a-1e) related toilet facilities, said method comprising the steps: monitoring a state of use of a first of said service units; upon detection of a change of said state of use from "not in use" to "in use" and/or vice versa; generating a signal indicative of said change; upon detection of said signal, switching the accessibility of a second of said service units different from said first service unit; wherein said switching of the accessibility of the second service unit occurs between at least two of a plurality of accessibility modes.

## Description

### Technical domain

The invention relates to the technical field of arrangement and organization of compartmentalized service units, i.e. technically delimited areas in space, such as toilet facilities. Thereby, the invention relates to a reduction of queues at these toilet facilities and/or an improvement of the operational functioning, in particular in the case of toilet facilities comprising a combination of stalls and urinals.

### State of the art

Compartmented service units are areas located in space that are associated with a functionality to serve a user. Examples of service units or stalls are toilet facilities, such as toilet stalls, urinals or sinks. Still other examples are fitting rooms, such as those in clothing stores, or locker rooms, such as those in swimming pools, gymnasiums, saunas, and professional settings. Still other examples are shower stalls, such as these in swimming pools, gymnasiums, saunas, and professional settings. Still other examples are seats in waiting rooms or galleries. Further examples are parking lots.

In the case of toilet facilities, layouts have traditionally included both stalls and urinals. Traditionally, these layouts were characterized by a gender-based triage, with separate areas for women only, on the one hand, and for men, on the other. Within these zones, a multitude of service units were then provided, with typically only stalls for women, on the one hand, and both stalls and urinals for men, on the other.

In recent decades, there has been a global shift away from this tradition, with the rise of the gender-neutral toilet. On the one hand, there are setups with only stalls and no urinals. One or more stalls, or all stalls, are gender-neutral. On the other hand, there are setups with both stalls and urinals, in which one or more stalls, or all stalls, are also gender-neutral.

Such service units are mostly statically laid out and organized. Often accessibility is regulated by permanent visual indicators such as signs. Often there is no monitoring of the use of the service units, nor control of access. The organization is also insufficiently adapted to toilet facilities that include both stalls and urinals, and this regardless of whether the stalls are gender-neutral or not. This leads to larger queues than necessary, and/or to operational problems.

WO2009061857A2 and WO2014035308A1 describe a monitoring of the use of service units being toilet facilities but do not focus on the arrangement and organization of toilet facilities. They are also not focused on controlling access.

EP4161337 discloses a related concept for monitoring toilet facilities with layouts with generic service units, where service units of different types are typically interchangeable. EP4161337 proposes methods suitable for toilet facilities with both stalls and urinals, but does not describe differentiated treatment of stalls relative to urinals in layouts with both stalls and urinals.

JP2018062776A describes remote leveling of the frequency of use of multiple toilet stalls when there are multiple toilet stalls. This relates to a toilet control server sending data. Thereby, a user can be suggested to use a toilet which is used less frequently, in order to equalize the state of use of the plurality of toilet stalls. KR20130113797A describes other related systems. However, JP2018062776A and KR20130113797A similarly do not describe differentiated treatment of stalls versus urinals in arrangements with both stalls and urinals.

US20130131971A1 reveals a method that includes identifying a location of a display device. However, US20130131971A1 also does not describe a differentiated treatment of stalls relative to urinals in setups with both stalls and urinals.

A problem with the above approaches is that they thus do not take into account differentiated treatment of stalls versus urinals in setups with both stalls and urinals. However, this is relevant to any toilet facility with both stalls and urinals, whether or not it includes gender-neutral stalls.

### Summary

The present invention provides a solution to the aforementioned problems by means of an indicator provided at the level of the urinal, which generates a visual stimulus at appropriate times.

In a first aspect, the invention provides a method for controlling an accessibility with respect to a plurality of compartmentalized service units related to toilet facilities, said method comprising the steps:
monitoring a state of use of a first of said service units;
upon detection of a change of said state of use from "not in use" to "in use" and/or vice versa; generating a signal indicative of said change;
upon detection of said signal, switching the accessibility of a second of said service units different from said first service unit;
wherein said switching of accessibility of the second service unit occurs between at least two of a plurality of accessibility modes.

EP4161337 can be considered close prior art. However, the invention differs from what is described in EP4161337 at least in that the first service unit relates to a stall, wherein the detected change of the state of use is from "not in use" to "in use", wherein the second service unit relates to a urinal, and wherein said change of accessibility from a first accessibility mode to a second accessibility mode comprises generating a visual stimulus by means of an indicator provided in proximity of the urinal. Preferably, the indicator is provided at the level of the urinal, but the indicator may also be provided in proximity of the urinal.

In preferred embodiments, the compartmentalized service units relate to toilet facilities with more than one stall and more than one urinal.

The invention advantageously provides an indicator at the level of the urinal, which generates a visual stimulus at appropriate times. With such visual stimulus, the invention enables a form of *nudging,* actively influencing the behavior of users in their choice of service unit. Thereby, according to the invention, the visual stimulus is generated the moment a stall (of one or more stalls) switches from "not in use" to "in use." This allows, first, a reduction of queues, and/or, second, an improvement of the operational functioning.

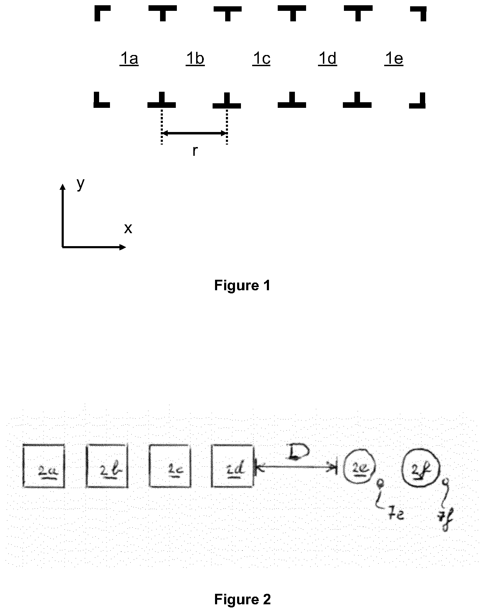

First, a reduction in queues is made possible. In toilet facilities with both stalls and urinals, (among others, male) toilet users who want to urinate have access to both the gender-neutral stall and urinal. In the case of women's urinals, this in turn involves (among other things) female toilet users. From the point of view of these toilet users, both choices are possible options, and the choice depends on personal preferences. However, in order to reduce queues, it is (much) better if these toilet users use the urinals that are still available as much as possible, and only resort to the stalls when the urinals are completely unavailable. After all, it is known that toilet time, i.e., the duration of a toilet visit, is significantly shorter when using a urinal than when using a stall. Common estimates are, for example, one and a half minutes for a stall visit, and one minute for a urinal, see for comparison (Van Hautegem, K., Rogiest, W. (2017), No more queueing at the ladies' room, http://peopleqm.blogspot.com/2017/07/no-more-queueing-at-ladies-room.html), below (Van Hautegem and Rogiest). Thus, by encouraging use of urinals, toilet users' sojourn time is reduced, and the service unit in question (a urinal) becomes available more quickly to the next user, resulting in a reduction in the queue (and a reduction in waiting time). On the other hand, users are less and less likely to use urinals as it gets busier at the urinals. This is known as the urinal problem, as described, for example, in (Kranakis E., Krizanc D. (2010) The Urinal Problem. doi:10.1007/978-3-642-13122-6_28), below (Kranakis and Krizanc). This problem is particularly relevant when considering queues and wait times because it occurs just when it is busy, i.e., just when queues occur and wait times increase. Typically, users leave at least one urinal between them, which, if done uncontrolled, quickly leads to "gaps" of two units between users. In doing so, users tend to occupy a stall in its place, leading to an increase in waiting time (due to higher toilet time). This is a first *waiting line effect*, which itself leads to a faster-than-linear increase in waiting time, where, on average, half a minute of additional toilet time results in more than half a minute of additional waiting time for subsequent visitors. This nonlinearity can be understood (albeit in a different setting) from the argument in (Van Hautegem and Rogiest). Some users even prefer to queue for a stall even when urinals are still available. This is a second *waiting line effect*, leading to a separate, also faster-than-linear increase in waiting time, where, on average, each minute spent in the queue for the stall (rather than being served at a urinal without waiting) leads to more than a minute of additional waiting time for subsequent visitors. This second effect corresponds to incomplete utilization of system capacity, i.e., performance below maximum capacity, where the system (in queueing terminology) does less work per unit of time than it is actually capable of doing (English: "non work-conserving"), and thus functions sub-optimally. To understand both effects, take, for example, a row of five ascending numbered units (see, e.g., Figure 1), in this example urinals. If a first and second user occupy the first and fourth positions (numbers 1 and 4), then a third user must necessarily wait, or occupy one of the urinals right next to the occupied units. However, the latter is less likely to even unlikely in the case of urinals, see (Kranakis and Krizanc), so the third user will resort to a stall, with possibly another queue first. Which is undesirable, both because of the higher toilet time (first effect), and because of the possible incomplete utilization of system capacity (second effect, in the case of a queue for the stalls). The invention caters hereto, by providing users with a visual stimulus to, when choosing between the choice options stall or urinal, choose the urinal whenever possible. The fact that the visual stimulus is generated when a stall switches from "not in use" to "in use" means that the stimulus is not constantly present, but only at times when both the first and second effects become relevant. For example, in the case of a single stall and multiple urinals, both effects play a direct role, because the single stall is no longer available, and thus the second effect occurs immediately, as soon as someone queues for this stall as long as a urinal is still available. In the case of multiple stalls, the first effect still plays a direct role, but the second effect is also relevant anyway, because higher stall occupancy increases the risk of the second effect occurring. In embodiments with multiple stalls, the visual stimulus may occur according to a certain threshold, for example, as soon as at least one or at least two stalls are switched to "in use."

The invention enables queue reduction for very diverse combinations of stall(s) and urinal(s), which may be any combination. In exemplary embodiments, it concerns toilet facilities with at least one gender-neutral stall, in which toilet users who choose between a urinal and a stall for urination (typically men) are encouraged by means of the visual stimulus to use the urinal and not the gender-neutral stall, so that this stall remains available to all users, including those who do not prefer a urinal anyway (typically women). An example considers a layout with two stalls and a row of men's urinals, with one stall already in use, generating a visual stimulus to use the urinals, and with the men's urinals busy in use, with only a single empty space. Upon arrival, the first toilet user (a man) under the influence of the visual stimulus chooses to use the remaining urinal, experiencing no waiting time (waiting time zero). Immediately after, a second toilet user (a woman) arrives, who does not benefit from a male urinal anyway, and occupies the only stall still available, also without waiting time (waiting time zero). Thus, both users (male and female) experience no waiting time, and the average waiting time is thus zero, thanks in part to the generation of the visual stimulus according to the invention. Without such visual stimulus, the first user (the man) would most likely, due to the well-known urinal problem, opt for the last stall, and the second user (the woman) would have to wait for one of the stalls to become vacant again. Thus, the average waiting time would not be zero, with not only a waiting time for the second user (the woman), but typically also with follow-up delays for the third and subsequent users (first effect anyway, possibly also second effect).

Second, the invention enables an improvement in operational functioning. This improvement is again made possible for any combination of urinal(s) and stall(s). In the simple case of gender-based triage, with a men's area with stalls and urinals, the invention can not only reduce queueing (by curbing the first and second queue effect), but also improve operational functioning. After all, a toilet user with "the big message" (English: "number two") will not benefit from a urinal, and thanks to the invention will be more likely to find one more of the stalls free, which significantly improves operational functioning and user experience. Similar to the issue of reducing queues, this operational issue is also more relevant as it gets busier, as it becomes more difficult to keep at least one stall free when crowded. The invention advantageously corresponds to this issue by generating the visual stimulus when a stall switches from "not in use" to "in use."

In embodiments, when no stall is in use, there is no visual stimulus. This may have the advantage that there is less habituation on the part of the user with respect to that visual stimulus, so that the stimulation, when it occurs, is perceived as more exceptional, and thus may be stronger.

Generating a visual stimulus according to the invention may be related to *nudging.* In the context of toilet facilities, a well-known example of *nudging* is an image of a fly, which is stuck in the urinal in some public places. This prompts the user (subconsciously or not) to aim at that fly, leading to more hygienic toilet facilities. The image of the fly is the *nudge* in this regard. However, this is only passive nudging, in the form of a static image, and not the automated generation of a visual stimulus as is the case with the present invention, which corresponds to active and selective nudging. Moreover, the objective is different: nudging by means of an image of a fly is related to behavior modification when the service unit (a urinal) has already been chosen. On the contrary, in the context of the invention, nudging is related to the actual choice of the service unit, across stalls and urinals.

In a second aspect, the invention provides a device for controlling an accessibility related to a plurality of compartmentalized service units (1a-1e) relating to toilet facilities, said device comprising:
a service unit;
a sensor;
an indicator;
wherein said device is configured to perform the steps of:
monitoring, using said sensor, a state of use of a first of said service units;
upon detection of a change of said state of use from "not in use" to "in use" and/or vice versa; generating, by means of said service unit, a signal indicative of said change;
upon detection of said signal, by means of said indicator, switching the accessibility, of a second of said service units different from said first service unit;
wherein said switching of accessibility of the second service unit occurs between at least two of a plurality of accessibility modes,
wherein the first service unit comprises a stall, wherein the detected change of state of use occurs from "not in use" to "in use," and wherein the second service unit comprises a urinal, wherein said change of accessibility from a first accessibility mode to a second accessibility mode comprises generating, via the indicator provided in proximity of the urinal, a visual stimulus.

In a third aspect, the invention provides a system for controlling an accessibility with respect to a plurality of compartmentalized service units (1a-1e) comprising a plurality of stalls and a plurality of urinals, said device comprising:
a control unit;
a plurality of sensors, one per stall;
at least one indicator; wherein said device is configured to perform the steps of:
   monitoring, using said plurality of sensors, a utilization state of each of the stalls
   upon detection of a change of state of use from "not in use" to "in use" of at least one stall, calculating, by the control unit, whether a switch of accessibility of at least one urinal, preferably all urinals, is desired, preferably on the basis of a predetermined switching pattern;
   if a changeover is desired, generating, using said control unit, a signal indicative of said change;
   upon detection of said signal, through said at least one indicator, generating a visual stimulus for switching accessibility;
   wherein said at least one indicator is provided in proximity the plurality of urinals, preferably such that the visual stimulus is visible at the level of an access to the urinals.

Moreover, in embodiments of the system, the design is very simple, wherein said sensors are related to a motion sensor or a door sensor mounted on a door of and/or in proximity of the service units and wherein said visual indicator includes a screen or a colored light source such as a green or red LED, at the level of the respective urinal and/or for multiple urinals simultaneously and/or for all urinals simultaneously.

Further embodiments and their respective advantages are described in the detailed description and the dependent claims.

### Description of figures

**Figure 1** shows an example layout of five aligned compartmentalized service units (1a-1e) according to an example embodiment of the invention.
**Figure 2** shows an example layout with four stalls (2a-2d) and two urinals (2e, 2f) according to an example embodiment of the invention, where each urinal is provided with an indicator (7e, 7f).
**Figure 3** shows an example layout with four gender-neutral stalls (2a-2d) and two urinals (2e, 2f) according to an example embodiment of the invention, wherein the urinals are provided with a common first indicator (7) and a common second indicator (7').
**Figure 4** shows an example layout with a female-only stall (2a'), three gender-neutral stalls (2c-2d) and two urinals (2e, 2f) according to an example embodiment of the invention, wherein the urinals are provided with a common first indicator (7) and a common second indicator (7').

### Detailed description

In this document, "compartmentalized service unit" refers to an area located in space that is associated with a functionality to control a user. Examples of service units are toilet units such as toilet stalls, urinals or sinks. Still other examples are fitting rooms, such as those found in clothing stores, or locker rooms, such as those found in swimming pools, gymnasiums, saunas, and professional settings. Still other examples are shower stalls, such as these in swimming pools, gymnasiums, saunas, and professional settings. Still other examples are seats in waiting rooms or galleries. Still other examples are parking spaces. In this document at least two service units are always considered, which are located in some proximity to each other. In embodiments, the first and second service units are located in the same building, in the same business park, on the same recreational field, in the same exhibition hall or cinema or theater, or in the same city neighborhood. In embodiments, the first and second service units are located at a distance of less than 50 meters, preferably less than 20 meters, from each other and/or in the same room. In alternative embodiments, the first and second service units are located at a distance larger than 20 meters, preferably larger than 50 meters, from each other and/or in different floors of a building and/or in different wings of a building and/or in different locations of a site or city neighborhood. In embodiments, one or more of the service units are delineated in space, as is typically the case for toilets, locker rooms, and shower stalls. In embodiments, one or more of the service units are not strictly delineated in space but are still associated with a particular area, as is the case with urinals or sinks.

In this document, the term "nudging" refers to an indicator, preferably a visual indicator, which influences a user in making a choice between the service units according to the invention, without however necessarily eliminating any choice option. Such an indicator may relate to toilet facilities in which a set of signage is active, whereby the user is however constrained by other signage, such as the one indicating that a service unit is in use, which does constrain the user in his choice. Nudging can be understood here, for example, as explained in (Richard H. Thaler, Cass R. Sunstein, Nudge: Improving Decisions about Health, Wealth, and Happiness, ISBN: 978-0-300-12223-7, 2008, revised 2021). As evident to the skilled person, the indicator has as its technical effect increasing the likelihood that what is being nudged for is effectively chosen by a user. In the context of the invention, this relates to increasing the probability of choosing a service unit belonging to the subset of service units for which nudging is active.

In this document, the term "visual stimulus" refers to a visual stimulus to the user which preferably induces the user to perform a particular action. In preferred embodiments, the action is related to choosing a service unit from a subset of service units, wherein the subset of service units is marked by said stimulus. In embodiments, the visual stimulus thereby corresponds to nudging the user in their selection among the possible service units, with the intention that the user opts for a service unit belonging to the subset for which a visual stimulus is provided. In preferred embodiments, the visual stimulus is related to the illumination of an LED belonging to the indicator, for example a green LED, and/or the illumination of at least a part of a screen belonging to the indicator, preferably for each indicator belonging to the subset.

The technical advantages provided by the invention can be further understood by the term "busy period." The term "busy period" herein refers to a period beginning with the arrival of a user in an empty system, which extends for as long as at least one user is continuously present in the system. The "user" receives operation by a service related to a service unit, e.g., a toilet visit. The busy period ends when the system becomes empty again. In this context, reference is made to "first users", i.e. the user who arrives in an empty system and starts the busy cycle, and "subsequent users", i.e. the one or more users who find the system non-empty, and correspond to the rest of the busy cycle. Thereby, it is possible to consider both the first and the second queue effect as causes of prolongation of the busy cycle, which in turn, on average, leads to longer queues.

In embodiments, the urinal belongs to a plurality of urinals belonging to the plurality of compartmentalized service units, and an indicator is provided which is commonly provided for at least two of the urinals, preferably each of the urinals.

In embodiments, the urinal belongs to a plurality of urinals belonging to the plurality of compartmentalized service units and the stall belongs to a plurality of stalls belonging to the plurality of compartmentalized service units, and said indicator comprises a first indicator and a second indicator commonly provided for at least two of the urinals, preferably each of the urinals. In related embodiments, said first indicator generates said visual stimulus as soon as a first number of stalls in use is detected, for example one, and said second indicator generates said visual stimulus as soon as a second number of stalls in use is detected, for example all stalls. In related embodiments, the common first indicator is arranged in close proximity to the urinals. In example embodiments, the first indicator is provided above a common entrance that provides access to the at least two urinals, and generates a visual stimulus (e.g., lights up) as soon as at least a first predetermined number of stalls, e.g., one stall or two stalls or three stalls in use, preferably generating this visual stimulus only as long as at least this first predetermined number of stalls is in use, and preferably not generating (preferably extinguishing) when any number of stalls smaller than this predetermined first number of stalls is in use. This may have the advantage of nudging users even more optimally, with minimal exposure to nudging incentives, which may improve the effectiveness of nudging. This is not described or even suggested in, for example, JP2018062776A or KR20130113797A. In related preferred embodiments, the first indicator is visible relative to the route toward an entrance to the gender-neutral zone. This may have the advantage of further optimizing the influencing, where toilet users who have both the gender-neutral stalls and urinals as choice options are definitely reached and thus influenced in making their choice. In related embodiments, a common second indicator is set up in indirect proximity to the urinals and/or the common second indicator is set up in the gender-neutral area, preferably being visible to all toilet users waiting in this area. In example embodiments, the second indicator is provided inside a common zone containing the at least two stalls, and generates a visual stimulus (e.g., lights up) as soon as at least a second predetermined number of stalls, e.g., one stall or two stalls or three stalls in use, preferably generating this visual stimulus only as long as at least this second predetermined number of stalls is in use, and preferably not generating it (preferably extinguishing it) when any number of stalls smaller than this predetermined second number of stalls is in use. The latter may have the advantage of enhancing *nudging,* and is not described or even suggested in, for example, JP2018062776A or KR20130113797A. In example embodiments, the second indicator relates to an illuminated text as a visual stimulus, with a recommendation to use the urinals, combined with an arrow in the direction of a passage toward access to the urinals. In example embodiments, for this second indicator, the visual stimulus is generated as soon as almost all of the stalls are in use, for example, at least half of the stalls, or all but one or two of the stalls, or all of the stalls. This second indicator may have the advantage of influencing toward the urinals with more urgency, with users who are already waiting in the gender-neutral zone being able to see the second indicator smoothly. This may be eminently advantageous when toilet users cannot see the urinals (with a first indicator, for example) while they are in the gender-neutral zone,

In embodiments, the first indicator is provided above a common entrance area that provides access to the at least two urinals, and generates a visual stimulus (e.g., lights up) as soon as at least a first predetermined number of stalls are in use, this visual stimulus preferably being generated only as long as at least this first predetermined number of stalls are in use, and preferably not being generated (preferably extinguished) when a number of stalls smaller than this predetermined first number of stalls are in use, **and the** second indicator is provided within a common area containing the at least two stalls, and generates a visual stimulus (e.g., lights up) as soon as at least a second predetermined number of stalls are in use, this visual stimulus preferably being generated only as long as at least this second predetermined number of stalls are in use, and preferably not generated (preferably extinguished) when a number of stalls smaller than this predetermined second number of stalls are in use. The latter may have the advantage of enhancing *nudging,* and is not described or even suggested in, for example, JP2018062776A or KR20130113797A. Thereby, the second predetermined number of stalls is preferably not less than the first predetermined number of stalls, with more preferably larger than the first predetermined number of stalls. This may be eminently advantageous when toilet users cannot see the first indicator (and by extension, whether or not, the urinals) as long as they dwell in the gender-neutral zone, whereby this first indicator does become visible as soon as they follow (e.g., in accordance with the recommendation and the arrow towards access) the recommended route to a urinal zone. In this way, the second indicator and the first indicator can commonly *nudge* the toilet user to follow a recommended route towards the entrance of the urinal zone. In doing so, the second indicator can, for example, have limited visibility outside the gender-neutral zone, but be visible just before entering through a passageway towards urinals. In this way, users can be additionally influenced to choose a urinal in cases of crowding where both the first and second indicators are active.

In example embodiments, the indicator is provided in the direct proximity of the urinal. This is the case, for example, for an indicator commonly provided for a row of urinals, where the indicator is provided, for example, at the level of the entrance to this row of urinals. In example embodiments, the indicator is provided in the indirect proximity of the urinal. This is the case, for example, for an indicator commonly provided for a row of urinals, wherein the indicator is provided, for example, in the adjacent zone where stalls are provided, to encourage users approaching the stalls, or users waiting for a stall to become available, to use a urinal instead. In example embodiments, an indicator in close proximity to the urinals generates a visual stimulus once an initial threshold of number of stalls in use is reached, for example one stall. This can be advantageously combined (or not) with an indicator in the indirect proximity of the urinals, whereby by means of the latter a visual stimulus is generated as soon as a second threshold is reached. Thereby the second threshold is preferably higher than the first threshold, for example when all stalls, or all but one, are in use.

In embodiments with a sensor provided at the one or more urinals, the visual stimulus is generated only if at least one urinal is not in use. In other embodiments, the visual stimulus is generated without regard to the number of urinals in use, for example, in embodiments without a sensor at the level of the urinal.

In embodiments, the accessibility of the service units is controlled by means of visual indicators being light elements, one per unit, preferably located at the level of the respective service units. If there is no light, this corresponds to the absence of a visual stimulus. If the color is green, it means that the unit is available and its use is additionally "encouraged", through the visual stimulus. In example embodiments, a further color is defined, for example blue, when it is detected that the unit is in use.

In embodiments, control of the one or more indicators is by means of a service unit connected to a detection unit or sensor. Preferably, the detection unit detects at least motion, and is thus capable of detecting the state of use ("not in use" or "in use") of each of the units. In example embodiments, each stall, or even each stall and additionally each urinal, has a separate sensor.

In this document, "control of accessibility" is an umbrella term encompassing access control, as known to the skilled person. "Control of accessibility" is broadly understood in this document, where in embodiments no identification is provided at the level of individuals, but only through a visual stimulus.

In embodiments, said indicator comprises a screen or a colored light source such as a green LED for generating the visual stimulus, and wherein said switching relates to turning on the visual stimulus, preferably green light generated by the green LED, during the second accessibility mode.

In embodiments, the urinal belongs to a plurality of urinals belonging to the plurality of compartmentalized service units (1a-1e), wherein said urinals are collectively provided, preferably provided in one or more rows, wherein each urinal is provided with its own indicator, and wherein the visual stimulus is generated at the level of the respective indicators according to a particular switching pattern. The switching pattern may relate, for example, to the wiper pattern or the maximum-switching pattern as described in EP4161337.

In embodiments , the detected change of the state of use of the stall from "not in use" to "in use" leads to the generation of the visual stimulus at the level of more than one of the urinals through the respective indicators.

In embodiments, the detected change of the state of use of the stall from "not in use" to "in use" leads to the generation of the visual stimulus at the level of each of the urinals through the respective indicators.

In embodiments, said monitoring of the state of use includes monitoring all one or more urinals and one or more stalls, and wherein the detected change of the state of use of the stall from "not in use" to "in use" results in generating the visual stimulus at the level of only urinals with state of use "not in use", preferably all urinals with state of use "not in use".

In embodiments, the stall belongs to a plurality of stalls belonging to the plurality of compartmentalized service units (1a-1e), wherein said switching of accessibility occurs as soon as the number of stalls with operation state "in use" exceeds a predetermined number, preferably exceeding one, two or three.

In embodiments, the urinal belongs to a plurality of urinals each provided with its own indicator and belonging to the plurality of compartmentalized service units (1a-1e), wherein the stall belongs to a plurality of stalls belonging to the plurality of compartmentalized service units (1a-1e), and wherein said switching of accessibility occurs for a larger number of urinals as the number of stalls with state of use "in use" is larger.

In embodiments, at least one of the one or more stalls is a gender-neutral stall.

In embodiments, the plurality of compartmentalized service units (1a-1e) are provided according to mutually separated first and second zones, wherein the first zone includes one or more first-zone stalls and is for women only, wherein the second zone includes one or more urinals and one or more second-zone stalls including said gender-neutral stall, and wherein at least one of the one or more stalls whose state of use is monitored belongs to the first-zone stalls.

In embodiments, the plurality of compartmentalized service units (1a-1e) is provided according to a separated zone only for women, on the one hand, and a separated zone only for men, on the other hand, and where both the stall that is monitored and the urinal whose accessibility is controlled belong to the zone only for men.

In embodiments, said sensor relates to a motion sensor or a door sensor mounted on a door or in proximity of said first service unit and wherein said indicator comprises a screen or a colored light source such as an LED.

In embodiments, each urinal is provided with its own indicator which is **either** additional to said at least one indicator or is provided instead of said at least one indicator.

According to further aspects, which do not limit the invention, the invention relates to the following clauses 1-15, which correspond to the claims of priority application BE 2023/5690.
Clause 1. Method for controlling an accessibility with respect to a plurality of compartmentalized service units (1a-1e) related to toilet facilities, said method including the steps:
   monitoring a state of use of a first of said service units;
   upon detection of a change of said state of use from "not in use" to "in use" and/or vice versa; generating a signal indicative of said change;
   upon detection of said signal, switching the accessibility of a second of said service units different from said first service unit;
   wherein said switching of accessibility of the second service unit occurs between at least two of a plurality of accessibility modes,
   characterized in that the first service unit comprises a stall, wherein the detected change of the state of use is from "not in use" to "in use," and that the second service unit comprises a urinal, wherein said change of accessibility from a first accessibility mode to a second accessibility mode comprises generating, by means of an indicator provided in proximity of the urinal, preferably at the level of the urinal, a visual stimulus.
Clause 2. Method according to clause 1, wherein said indicator comprises a screen or a colored light source such as a green LED for generating the visual stimulus, and wherein said switching is related to turning on the visual stimulus, preferably green light generated by the green LED, during the second accessibility mode.
Clause 3. Method according to clause 2, wherein the urinal belongs to a plurality of urinals belonging to the plurality of compartmentalized service units (1a-1e); wherein said urinals are preferably provided commonly, with more preferably provided in one or more rows; wherein each urinal is provided with its own indicator; and wherein the visual stimulus is generated at the level of the respective indicators according to a particular switching pattern.
Clause 4. Method according to clause 3, wherein the detected change of the state of use of the stall from "not in use" to "in use" leads to the generation of the visual stimulus at the level of more than one of the urinals through the respective indicators.
Clause 5. Method according to clause 4, wherein the detected change of the state of use of the stall from "not in use" to "in use" leads to the generation of the visual stimulus at the level of each of the urinals through the respective indicators.
Clause 6. Method according to clauses 1-5, wherein said monitoring of the state of use includes monitoring all one or more urinals and one or more stalls, and wherein the detected change of the state of use of the stall from "not in use" to "in use" leads to generating the visual stimulus at the level of only urinals with state of use "not in use", preferably all urinals with state of use "not in use".
Clause 7. Method according to clauses 1-6, wherein the stall belongs to a plurality of stalls belonging to the plurality of compartmentalized service units (1a-1e), wherein said switching of accessibility occurs as soon as the number of stalls with operation state "in use" exceeds a predetermined number, preferably one, two or three.
Clause 8. Method according to clauses 1-7, wherein the urinal belongs to a plurality of urinals each provided with its own indicator and belonging to the plurality of compartmentalized service units (1a-1e), wherein the stall belongs to a plurality of stalls belonging to the plurality of compartmentalized service units (1a-1e), and wherein said switching of accessibility occurs for a larger number of urinals as the number of stalls with state of use "in use" is larger.
Clause 9. Method according to clauses 1-8, wherein at least one of the one or more stalls is a gender-neutral stall.
Clause 10. Method according to clause 9, wherein the plurality of compartmentalized service units (1a-1e) are provided according to mutually separated first and second zones, wherein the first zone includes one or more first-zone stalls and is intended for women only, wherein the second zone includes one or more urinals and one or more second-zone stalls including said gender-neutral stall, and wherein at least one of the one or more stalls whose state of use is monitored belongs to the first-zone stalls.
Clause 11. Method according to clauses 1-10, wherein the plurality of compartmentalized service units (1a-1e) are provided according to a segregated area for women only, on the one hand, and a segregated area for men only, on the other hand, and wherein both the stall being monitored and the urinal whose accessibility is controlled belong to the area for men only.
Clause 12. Method according to clauses 1-11, wherein the urinal belongs to a plurality of urinals belonging to the plurality of compartmentalized service units and wherein the stall belongs to a plurality of stalls belonging to the plurality of compartmentalized service units, and wherein said indicator comprises a first indicator and a second indicator which are commonly provided for at least two of the urinals, preferably each of the urinals.
Clause 13. Method according to clause 12, wherein by means of the first indicator said visual stimulus is generated as soon as a first number of stalls in use is detected, and wherein by means of the second indicator said visual stimulus is generated as soon as a second number of stalls in use is detected, for example all stalls.
Clause 14. Device for controlling an accessibility with respect to a plurality of compartmentalized service units (1a-1e) related to toilet facilities, said device comprising:
   a control unit;
   a sensor;
   an indicator;
   wherein said device is configured to perform the steps of:
   monitoring, using said sensor, a state of use of a first of said service units;
   upon detection of a change of said state of use from "not in use" to "in use" and/or vice versa; generating, by means of said service unit, a signal indicative of said change;
   upon detection of said signal, by means of said indicator, switching the accessibility, of a second of said service units different from said first service unit;
   wherein said switching of accessibility of the second service unit occurs between at least two of a plurality of accessibility modes,
   having the characteristic that the first service unit involves a stall, wherein the detected change of the state of use is from "not in use" to "in use," and that the second service unit involves a urinal, wherein said change of accessibility from a first accessibility mode to a second accessibility mode includes generating, through the indicator provided in proximity of the urinal, a visual stimulus.
Clause 15. Device according to clause 14, wherein said sensor is related to a motion sensor or a door sensor mounted on a door or in proximity of said first service unit and wherein said indicator includes a screen or a colored light source such as an LED.
Clause 16. System for controlling an accessibility with respect to a plurality of compartmentalized service units (1a-1e) comprising a plurality of stalls and a plurality of urinals, said device comprising:
   a control unit;
   a plurality of sensors, one per stall;
   at least one indicator;
   wherein said device is configured to perform the steps of:
      monitoring, using said plurality of sensors, a state of use of each of the stalls
      on detection of a change of state of use from "not in use" to "in use" of at least one stall, calculating, by the control unit, whether a switch of accessibility of at least one urinal, preferably all urinals, is desirable, preferably on the basis of a predetermined switching pattern;
      if a changeover is desirable, generating, using said control unit, a signal indicative of said change;
      upon detection of said signal, through said at least one indicator, generating a visual stimulus for switching accessibility;
      wherein said at least one indicator is provided in proximity of the plurality of urinals, preferably such that the visual stimulus is visible at the level of an access to the urinals.
Clause 17. System according to clause 16, wherein each urinal is provided with its own indicator which is either additional to said at least one indicator or is provided in place of said at least one indicator.

In what follows, the invention is described using non-limiting examples illustrating the invention, which are not intended or to be interpreted to limit the scope of the invention.

### Example 1

Figure 1 shows an example layout, i.e. a ground plan, of five aligned compartmentalized service units (1a-1e), with a width direction according to the x-direction, and a depth direction according to the y-direction. This is a generic representation of, for example, a row of five stalls, a row of five urinals, or a row of three gender-neutral stalls (1a, 1b, 1c) followed by a row of two urinals (1d, 1e). In this example, a row of three gender-neutral stalls (1a, 1b, 1c) followed by a row of two urinals (1d, 1e) is considered. Thereby, the detected change of the state of use of any of the stalls from "not in use" to "in use" leads to the generation of the visual stimulus at the level of each of the two urinals, through a single indicator, being a bright green LED. The green LED remains on as long as either of the two stalls remains in use, and remains on for a certain "hold time", e.g. 30 seconds, after a stall is left, so that there is no on and off effect. In variations, however, the hold time is zero. Only when all stalls are empty and the hold time has expired, the green LED goes out. The green LED comes back on as soon as either stall is put into use. The use of the urinals has no influence on this, nor is it detected.

### Example 2

Example 2 is the same as Example 1, except that one indicator LED is now provided per urinal, and the use of the urinals is now detected, through sensors, one per urinal. The sensor and indicator are thereby integrated in the same housing. The LED illuminates bright green when a visual stimulus is generated. However, when the urinal is in use, this visual stimulus is temporarily suppressed, for the duration of use, and replaced by display of light of a blue color, preferably with lower intensity than the green color of the visual stimulus. During this use, the indicators of other urinals that are not in use may continue to illuminate green. As soon as the urinal is no longer in use, the visual stimulus resumes, unless at that time the stalls are both empty and the hold time has expired. In the latter case, the LED extinguishes. If the next toilet user to arrive uses the urinal, the LED immediately turns blue. On the other hand, if the next toilet user uses one of the other urinals, then the LED remains extinguished. If the next toilet user occupies a stall, then the LED turns on bright green, as a visual stimulus.

### Example 3

This example is the same as Example 2, except that the green light now stays on unabated whether the urinal is in use or not. This may be related to a third color coming from the same LED (both green and blue), or, preferably, to a pair of LEDs, one for green and one for blue.

### Example 4

This example is the same as Example 3, except that stall 1a is now for women only, and is provided in a segregated area. In turn, stalls 1b and 1c are gender-neutral stalls provided in the same zone as urinals 1d and 1e, but with a considerable distance (for example, more than one meter) between the stalls on the one hand and the urinals on the other. The generation of the visual stimulus does occur as in Example 1. Indeed, for women who do not benefit from the urinals, it is of interest that the stalls remain as free as possible, including the gender-neutral stalls. So it makes sense that even the occupancy of stall 1a can lead to the generation of the visual stimulus. Indeed, the taking in use of this stall leads to increased "pressure" on the remaining gender-neutral stalls, which can be used by both women and men, and thus ideally remain available as much as possible. Equally, it makes sense that the taking in use of stalls 1b or 1cwill lead to generation of the visual stimulus. After all, the taking in use of one of these stalls will increase the "pressure" on both the remaining gender-neutral stall and stall 1a.

### Example 5

This example has variations according to examples 1, 2, 3 and 4, the only difference being that the visual stimulus is generated only as soon as two stalls are in use, rather than when only one stall is in use.

### Example 6

Example 6 is illustrated by Figure 2. Figure 2 shows an example layout with four stalls (2a-2d) and two urinals (2e, 2f) according to an example embodiment of the invention, each urinal being provided with an indicator (7e, 7f). These are provided according to a certain spacing D, in order to provide sufficient separation between the stall zone and the urinal zone, which enhances user comfort. Both stalls and urinals are equipped with respective sensors (not shown in Figure 2) and are provided as gender-neutral stalls. Through the indicators (7e, 7f) at the level of the respective urinals (2e, 2f), a visual stimulus (strong green light) is generated as soon as at least one of the stalls is in use. When a urinal 2e is in use, the visual stimulus is suppressed, and instead blue dimmed light is displayed by means of the indicator 7e at the level of this urinal 2e, preferably displaying the visual stimulus on the indicator 7f of the other urinal 2f more powerfully (more powerful green light). In this way, the urinal problem, which typically occurs when there is more crowding at the urinals, is compensated more strongly as more crowding is detected at the urinals. This is related to stronger nudging, where more powerful light corresponds to a stronger visual stimulus.

### Example 7

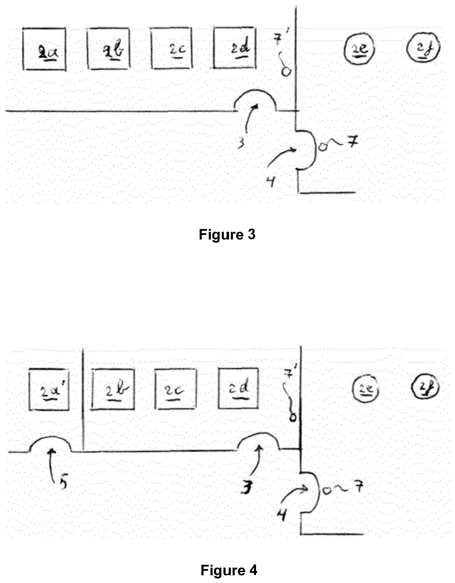

Example 7 is illustrated by Figure 3. Figure 3 shows a sample layout with four gender-neutral stalls (2a-2d) and two urinals (2e, 2f) according to a sample embodiment of the invention, wherein the urinals are provided with a common first indicator 7 and a common second indicator 7'.

The four gender-neutral stalls (2a-2d) are provided in a gender-neutral zone with access 3. The two urinals (2e, 2f) are provided in a urinal zone, with access 4. In this example, they may be male urinals; in a variant, they are female urinals. The common first indicator 7 is arranged in close proximity to the urinals. In this example, the first indicator is an illuminated green arrow provided above the entrance to the entrance 4. By means of this indicator, a visual stimulus is generated as soon as at least one of the stalls (2a-2d) is in use. Thereby, the first indicator 7 is highly visible in relation to the route towards the entrance 3 to the gender-neutral zone, for optimal influence. In this way, toilet users who have both the gender-neutral stalls (2a-2d) and urinals (2e-2f) as choice options can be influenced in making their choice.

The common second indicator 7' is set up in the indirect proximity of the urinals. This indicator becomes active only when it becomes busier. This second indicator 7' is set up in the gender-neutral zone, and is visible to everyone present in this zone. In this example, the second indicator is related to an illuminated text as a visual stimulus, with a recommendation to use the urinals, combined with an arrow in the direction of passage 3, toward access 4. Through this second indicator, the visual stimulus is generated as soon as almost all the stalls are in use, for example, three stalls, or four stalls. Thanks to this second indicator, with more insistence influence is done towards the urinals, where users who are already waiting in the gender-neutral zone can easily see the second indicator 7'. They cannot see the first indicator 7 as long as they are in the gender-neutral zone, but it becomes visible as soon as they follow (in accordance with the recommendation and the arrow towards access 4) the recommended route to the urinal zone. In this way, the second indicator and the first indicator commonly mark a recommended route towards the entrance 4 to the urinal zone. The second indicator 7' has limited visibility outside the gender-neutral zone, but is visible just before entering via passage 3'. In this way, users are additionally influenced to choose a urinal in cases of crowding, where both the first 7 and the second 7' indicators are active.

### Example 8

Example 8 is illustrated by Figure 4, and is the same as Example 7 (with Figure 3), except that the stall 2a' is now provided as a women-only stall, within a segregated area for women only, the women's zone, with separate access 5. In the gender-neutral zone with access 3, the three gender-neutral stalls (2c-2d) are provided, while the two urinals (2e, 2f) are provided in a urinal zone, with access 4. In this example, these are male urinals. The common first indicator 7 is visible at the level of the urinal zone access. Through this indicator, a visual stimulus is generated as soon as at least one of the stalls (2a', 2b-2d) is in use. Preferably, it does not matter whether it is the women-only booth 2a' or the gender-neutral booths. Thereby, the first indicator 7 is clearly visible in relation to the route toward the entrance 3 to the gender-neutral area. Thus, men, who have both the gender-neutral stalls (2b-2d) and the urinals (2e-2f) as choice options, may be influenced in making their choice. On the other hand, whether the first indicator 7 is highly visible relative to entrance 5 of the women's zone does not matter. This is because the women visiting the women's zone do not benefit from the urinals (2e-2f), which are men's urinals, and thus no influencing is needed.

The common second indicator 7' is set up in the gender-neutral zone, and is visible to everyone present in this zone. Through this second indicator, the visual stimulus is generated as soon as almost all stalls are in use, for example, three stalls, or four stalls. The count of stalls in use is preferably done without distinguishing between the female-only stall and the gender-neutral stalls. Thanks to this second indicator, influencing is done with more urgency towards the urinals, where users who are already waiting in the gender-neutral zone can smoothly see the second indicator, while they cannot see the first indicator. The second indicator 7' is not visible relative to the entrance 5 of the women's zone, which is not a problem. After all, the women visiting the women's zone do not benefit from the urinals (2e-2f), which are men's urinals, and so no influencing is needed.

### (End of Example 8)

Examples have been given above for "stalls" or "urinals," but these terms are not constricting. For example, they can refer to any compartmentalized service unit related to a toilet bowl and/or seated urination and/or seated toilet use (e.g., stall) or an activity of standing urination (e.g., men's urinal or women's urinal).

## Claims

1. Method for controlling an accessibility with respect to a plurality of compartmentalized service units (1a-1e) relating to toilet facilities, said method including the steps:
monitoring a state of use of a first of said service units;
upon detection of a change of said state of use from "not in use" to "in use" and/or vice versa; generating a signal indicative of said change;
upon detection of said signal, switching the accessibility of a second of said service units different from said first service unit;
wherein said switching of accessibility of the second service unit occurs between at least two of a plurality of accessibility modes,
**characterized in that** the first service unit concerns a stall, wherein the detected change of state of use is from "not in use" to "in use," **and that** the second service unit concerns a urinal, wherein said change of accessibility from a first accessibility mode to a second accessibility mode comprises generating, by means of an indicator provided in proximity of the urinal, preferably at the level of the urinal, a visual stimulus.

2. Method according to claim 1, wherein said indicator comprises a screen or a colored light source such as a green LED for generating the visual stimulus, and wherein said switching relates to turning on the visual stimulus, preferably green light generated by the green LED, during the second accessibility mode;
**preferably** wherein the urinal belongs to a plurality of urinals belonging to the plurality of compartmentalized service units (1a-1e); wherein said urinals are preferably provided commonly, more preferably provided in one or more rows; wherein each urinal is provided with its own indicator; and wherein the visual stimulus is generated at the level of the respective indicators according to a particular switching pattern;
**with more preference** wherein the detected change of the state of use of the stall from "not in use" to "in use" leads to the generation of the visual stimulus at the level of more than one of the urinals through the respective indicators;
**with even more preference** wherein the detected change of the state of use of the stall from "not in use" to "in use" leads to the generation of the visual stimulus at the level of each of the urinals through the respective indicators.

3. Method according to claims 1 or 2,
**wherein** said monitoring of the state of use comprises monitoring all one or more urinals and one or more stalls, and wherein the detected change of the state of use of the stall from "not in use" to "in use" results in generating the visual stimulus at the level of only urinals with state of use "not in use", preferably all urinals with state of use "not in use";
**and/or**
**wherein** the stall belongs to a plurality of stalls belonging to the plurality of compartmentalized service units (1a-1e), wherein said switching of accessibility occurs as soon as the number of stalls with state of use "in use" exceeds a predetermined number, preferably exceeds one, two or three;
**and/or**
**wherein** the urinal belongs to a plurality of urinals each provided with its own indicator and belonging to the plurality of compartmentalized service units (1a-1e), wherein the stall belongs to a plurality of stalls belonging to the plurality of compartmentalized service units (1a-1e), and wherein said switching of accessibility occurs for a larger number of urinals as the number of stalls with state of use "in use" is larger;
**and/or**
**wherein** the plurality of compartmentalized service units (1a-1e) are provided according to a separated area only for women, on the one hand, and a separated area only for men, on the other hand, and wherein both the stall that is monitored and the urinal whose accessibility is controlled belong to the area only for men.

4. Method according to claims 1-3, where at least one of the one or more stalls is a gender-neutral stall.

5. Method according to claim 4, wherein the plurality of compartmentalized service units (1a-1e) are provided according to mutually separated first and second zones, wherein the first zone includes one or more first-zone stalls and is intended for women only, wherein the second zone includes one or more urinals and one or more second-zone stalls including said gender-neutral stall, and wherein at least one of the one or more stalls whose state of use is monitored belongs to the first-zone stalls.

6. Method according to claims 1-5, wherein the urinal belongs to a plurality of urinals belonging to the plurality of compartmentalized service units and wherein the stall belongs to a plurality of stalls belonging to the plurality of compartmentalized service units, and wherein said indicator comprises a first indicator and preferably a second indicator which are commonly provided for at least two of the urinals, preferably each of the urinals.

7. Method according to claim 6, wherein a common first indicator and a common second indicator are provided, and wherein by means of the first indicator said visual stimulus is generated as soon as a first number of stalls in use is detected, and wherein by means of the second indicator said visual stimulus is generated as soon as a second number of stalls in use is detected, for example all stalls.

8. Method according to claims 6-7, wherein the common first indicator is set up in close proximity to the urinals.

9. Method according to claims 6-8, wherein the first indicator is provided above a common entrance providing access to the at least two urinals.

10. Method according to claims 6-9, wherein the first indicator generates a visual stimulus as soon as at least an initial predetermined number of stalls, for example, one stall or two stalls or three stalls, is in use.

11. Method according to claim 10, wherein this visual stimulus is generated only as long as at least the first predetermined number of stalls is in use, and is not generated when a number of stalls smaller than this predetermined first number of stalls is in use.

12. Method according to claim 11, wherein a common first indicator and a common second indicator are provided, wherein the second indicator is provided within a common zone containing the at least two stalls.

13. Method according to claim 12, wherein the second indicator generates a visual stimulus as soon as at least a second predetermined number of stalls is in use; wherein the second predetermined number of stalls is larger than the first predetermined number of stalls; wherein this visual stimulus is preferably generated only as long as at least this second predetermined number of stalls is in use, and preferably is not generated when a number of stalls smaller than this predetermined second number of stalls is in use.

14. Device for controlling an accessibility with respect to a plurality of compartmentalized service units (1a-1e) relating to toilet facilities, said device comprising:
a service unit;
a sensor;
an indicator;
wherein said device is configured to perform the steps of:
monitoring, using said sensor, a state of use of a first of said service units;
upon detection of a change of said state of use from "not in use" to "in use" and/or vice versa; generating, by means of said service unit, a signal indicative of said change;
upon detection of said signal, by means of said indicator, switching the accessibility of a second of said service units different from said first service unit;
wherein said switching of accessibility of the second service unit occurs between at least two of a plurality of accessibility modes,
**characterized in that** the first service unit involves a stall, wherein the detected change of the state of use is from "not in use" to "in use," **and in that** the second service unit involves a urinal, wherein said change of accessibility from a first accessibility mode to a second accessibility mode includes generating, through the indicator provided in proximity of the urinal, a visual stimulus;
wherein said sensor **is preferably** related to a motion sensor or a door sensor mounted on a door or in proximity of said first service unit and wherein said indicator comprises a screen or a colored light source such as an LED.

15. System for controlling an accessibility with respect to a plurality of compartmentalized service units (1a-1e) comprising a plurality of stalls and a plurality of urinals, said device comprising:
a control unit;
a plurality of sensors, one per stall;
at least one indicator;
wherein said device is configured to perform the steps of:
monitoring, using said plurality of sensors, a state of use of each of the stalls
on detection of a change of state of use from "not in use" to "in use" of at least one stall, calculating, by the control unit, whether a switch of accessibility of at least one urinal, preferably all urinals, is desirable, preferably on the basis of a predetermined switching pattern;
if a changeover is desirable, generating, using said control unit, a signal indicative of said change;
upon detection of said signal, through said at least one indicator, generating a visual stimulus for switching accessibility;
wherein said at least one indicator is provided in proximity of the plurality of urinals, preferably such that the visual stimulus is visible at the level of an access to the urinals;
wherein each urinal is **preferably** provided with its own indicator which is **either** additional to said at least one indicator, or provided instead of said at least one indicator.
